# EUROPEAN PATENT SPECIFICATION

(11) **EP 2 563 559 B1**
(45) Date of publication and mention of the grant of the patent: **06.12.2017**
(21) Application number: 11775377.2
(22) Date of filing: 27.04.2011
(51) Int. Cl.: B27N 7/00, B27K 3/12, B27K 5/06, B05D 3/12, B05D 3/02, B27K 3/02, B27K 3/15, C08L 61/06, C08L 97/02

(54) **METHOD FOR TREATMENT OF A BOARD AND A BOARD ELEMENT**
VERFAHREN ZUR BEHANDLUNG EINES BRETTS UND BRETTELEMENT
PROCÉDÉ POUR TRAITER UN PANNEAU OU UN ÉLÉMENT DE PANNEAU

(30) Priority: 28.04.2010 SE 1050426
(43) Date of publication of application: 06.03.2013
(73) Proprietor: MB Ädelträ AB, 252 21 Helsingborg (SE)
(72) Inventor: BIZIC, Miljenko, S-252 21 Helsingborg (SE)
(74) Representative: Awapatent AB
(86) International application number: PCT/SE2011/050510
(87) International publication number: WO 2011/136728

(56) References cited:
- EP-A1- 0 197 674
- WO-A1-2008/155466
- WO-A1-2008/155466
- WO-A2-02/064337
- WO-A2-02/064337
- DE-A1- 10 314 974
- US-A- 6 083 437
- US-A1- 2007 122 644

## Description

### Technical field

The present invention relates to a method for treating a board of wood material, such as an HDF board, an MDF board, a plywood board, planks or boarding. The present invention also relates to a board element of wood material comprising one or more board layers.

### Background of the invention

Wood-based or wood fiber-based products have a wide range of applications and can be used for joinery works, within furniture production, for building works, etc. Wood can be used in the form of material which has merely been machined by sawing or planing into boards or planks. Veneer, i.e. 0.5-2 mm thick boards of wood, can be glued together in a number of layers to form plywood, for example veneer plywood. Wood fiber from timber of inferior quality can be taken to be for the manufacture of wood fiber-based products such as fiberboards of various types, for example MDF boards and HDF boards (Medium Density Fiberboard and High Density Fiberboard). An HDF board can be defined as a fiberboard having a density above 800 kg/m³, while an MDF board can be defined as a fiberboard having a density below 800 kg/m³.

These wood-based products can be treated in a variety of ways to increase the strength and resistance of the products. One way is, for example, to pressure-impregnate timber with wood preservatives, such as, for example, water-soluble salts, oil-soluble agents and creosote, for increased resistance to moisture penetration, fungal attack or mold, wear and tear, UV exposure, etc. Other ways of protecting wood products are to lacquer or paint a surface of the wood product. Generally speaking, dearer wood products such as veneer plywood have better resistance to moisture penetration, for example, than cheaper products such as MDF.

Especially in terms of the manufacture of MDF and HDF boards, current demands for a high production rate have resulted in boards of lower density compared with boards produced according to an older, slower method. It is known to manufacture fiberboards consisting of wood fiber with added binder in dry or wet processes. In modern manufacturing processes, dry processes are used primarily for the production of HDF boards. Examples of binders which are used in the production are phenol formaldehyde (PF) and melamine formaldehyde (MF).

HDF boards have a number of fields of application, inter alia as joinery and building materials. One field of application for HDF boards is in door manufacture and then, in particular, for the formation of door leaves. These door leaves are lacquered and often provided with decorative grooves which are milled out in the door leaves. Particularly in the Nordic climate, very high demands are placed on the door leaves, for example as regards water resistance and the like. The decorative grooves can cause problems as a result of water being able to penetrate under the lacquered surface from the milled-out grooves (grain-raising). These problems have previously been avoided through the use of an HDF board which has a very high density, for example above 1000 kg/m³, in door production, and which is provided with a surface which is waterproof and prevents moisture penetration.

The HDF boards which are currently produced with current demands for fast and rational manufacture do not however meet the demands which are placed on, for example, door leaves in the Nordic climate. Binders such as phenol formaldehyde, which give the HDF board advantageous properties as regards water resistance, require a uniform pressure and high temperature for their curing process. This means that it is not possible to use a continuous process when phenol formaldehyde is used as the binder. Since, in contemporary manufacturing, the use of an intermittent process is not thought to be sufficiently fast, binders substantially consisting of melamine formaldehyde (MF) are instead used in a continuous process. The use of these binders and in a continuous process results, however, in an HDF board having comparatively inferior water resistance. Moreover, the use of melamine formaldehyde (MF) gives high concentrations of formaldehyde in the finished product, while phenol formaldehyde (PF) gives off comparatively lower concentrations of formaldehyde after curing.

WO 02/064337A discloses a method for impregnating a lignocellulosic substrate with polyisocyanate. The substrate is impregnated with an isocyanate resin at an impregnation station where isocyanate resin material is heated by a resin heater and transported by a pump from a first reservoir to a series of applicator nozzles where the resin material is applied to and impregnated into the substrate. Excess resin is subsequently removed from the surface of the impregnated substrate using an air knife set blowing heated air on the surface of the impregnated substrate. The impregnated resin material is next polymerized at a polymerization station by applicator nozzles applying a liquid to the substrate at a temperature sufficient for polymerization of the isocyanate material. Excess liquid is removed from the substrate using air knifes blowing heated air on the surface of the impregnated substrate.

DE 1 0314 974 A discloses a body ("Formkörper") with lignocellulosic fibers. The body is formed by treating a preform ("Vorform") of low density with an impregnation fluid. The preform has been obtained by curing a paste of lignocellulosic fibers and binder. According to DE 1 0314 974 A the impregnation fluid may fill the voids in the preform.

### Summary of the invention

With the above in mind, one object of the present invention is to provide a method for treating a board of wood material, which method results in a board of wood material having improved properties, particularly as regards an increase in the density of the board and its resistance to, for example, water penetration, and also to provide a board element of wood material which has been improved in this way.

More precisely, a method for treating a board of wood material, such as an HDF board, an MDF board, a plywood board, veneer, planks or boarding, is provided, comprising the steps of providing a board of wood material, arranging a composition comprising a binder on a first main face of said board, arranging said board on a draining surface, heat-treating said board and the composition arranged thereon, and pressing the composition into said board.

A board of wood material which has been treated in accordance with the inventive method acquires a higher density in comparison with an untreated board and acquires better resistance to attacks such as penetration of water into the board. A board treated in accordance with the method has a more waterproof surface by virtue of the fact that the composition comprising the binder is arranged on a main face of the board. By varying the type of binder and the quantity of binder applied to the main face of the board and the magnitude of the pressure produced by the pressing, boards of increased density can be obtained. If the board which is provided is a conventional HDF board, an HDF board having a density from 1050-1200 kg/m³ can.be obtained, for example, depending on the quantity of added binder, the magnitude of the applied pressure and the time in the press. For example, a 4 mm thick HDF board having an original density of 970 kg/m³ can obtain a density of 1050 kg/m³ after having been treated with 80 g of binder in the form of phenol formaldehyde under pressure of 300 bar for 3 minutes.

In an MDF or HDF board, wood fibers are bound together by means of a binder. Between the wood fibers and the binder there are pockets or cavities. Solid wood products, too, have a varying degree of cavitied structure, the degree being partially dependent on the type of wood. Given a 15% moisture ratio, the mean density for the majority of wood types lies between 350 and 750 kg/m³. By virtue of the fact that the composition penetrates into the board of wood material, the binder permeates down into the structure of the boards and fills up pockets in the structure.

A board treated in accordance with the inventive method additionally acquires better water resistance due to its high concentration of binder and its first main face which is treated with binder. A board treated in accordance with the method swells less when exposed to water, due to the board having acquired a higher density. The higher density of the board means that there are fewer pockets in the material in which the water can penetrate into the structure of the board.

A board treated in accordance with the inventive method is suitable for use within fields of application in which very high demands are placed upon water resistance. Examples of such fields of application are outer doors, windows, French windows, façade materials, joineries, etc. A board, for example an HDF board having very high density, such as above 1200 kg/m³, can be used as surface cladding in wet rooms or as material in electrical applications in which high demands are placed upon water resistance, such as in order to replace bakelite. A treated board, such as an HDF board, can also replace laminated materials.

Besides good water resistance, a board treated in accordance with the inventive method obtains a hard and wear-resistant layer. The board obtains better resistance to wear than a conventional untreated board.

A further advantage of the present invention is that grain-raising problems are reduced for a board treated with the inventive method. In the lacquering and painting of boards, grain-raising problems arise, which can be dealt with by applying a number of layers of lacquer with subsequent smoothing, for example application of UV lacquer or smoothing with subsequent application of a new base coat layer before the top coat can be applied. These grain-raising problems are wholly or partially prevented if a board which has been treated with the above method is used. A board treated with the above method consequently needs to be treated with a significantly fewer number of coats, for example just base coat and top coat, or just top coat, in order to achieve the desired result, since the grain-raising problems have been reduced. Consequently, the consumption of varnish and/or paint per unit area of the board is reduced compared with the prior art. A lacquered and/or painted board can thus be produced at a lower price compared with known methods. Such a board can be used in a variety of fields in which boards are painted, for example kitchen fixtures, doors, windows, panels, other furniture and fittings.

It is also possible to use water paint on a board treated in accordance with the method according to the invention. A painted board which gives a reduced environmental impact at lower cost compared with painting with traditional paints can thus be obtained.

By virtue of the fact that the composition containing the binder is pressed into and penetrates into the structure of the board, the treated board acquires a denser structure in a portion which extends into the board and not just on the surface. In door manufacture, it is customary, in the finishing of the door leaf, to grind off about 0.1 mm in order to acquire a desired flat surface. If the board were only treated on the surface, the surface treatment would be ground off in connection with this factor. In the refinishing of a board treated in accordance with the inventive method, the treated portion is not ground off, by virtue of the fact that the treated portion can be made to extend into the board. This is also true of other applications in which grinding occur, for example floors.

Particularly for doors, it is also customary to mill out decorative grooves on the door leaf. In a board treated according to the above method, the milled-out groove can wholly or partially extend through a portion of the board in which the properties of the board, for example as regards water resistance, have been improved.

By varying the quantity of binder in the composition, the time for which the board is pressed and the magnitude of the pressure generated by pressing, it is possible to control how far into the board the composition, and thus the binder, penetrates.

In addition to binder, the composition preferably comprises a liquid, such as water, in which the binder is dissolved. When the board and the composition arranged thereon are exposed to heat, the liquid part of the composition will vaporize. By virtue of the fact that the board is arranged on a draining surface, a passage through the board for the liquid part or the vaporous part of the composition is offered when the composition flees from the warm region. This results in the composition penetrating into the board. The binder is thus transported into the board by virtue of the fact that the liquid part or the vaporous part of the composition flees from the heated region and into the board. The binder is transported into the board in a transverse direction to the main face of the board. The composition is thus pressed into the board. By *pressed* is meant that the composition is prevented from taking a path other than permeating down through the board. This can be realized, for example, by an object having an impermeable surface being arranged on the board and the composition arranged thereon. Apart from the pressure which the object exerts by virtue of its mass, an external pressure can also be applied to the board. The composition can also be pressed in by means of, for example, the provision of overpressure and the like. The composition is thus allowed only to penetrate into the board and the liquid part of the composition can then seep out from the board by virtue of the draining surface. The binder in the composition is thus also transported into the board and cures as the composition moves through the board. The binder cures when the pressure and/or the heat reaches a certain value and after a certain time. The pressure, temperature and time which is necessary to obtain curing is dependent on the properties of the binder. That part of the binder which has not cured continues to be led deeper down into the board with the liquid part or the vaporous part of the composition. By varying pressure, temperature and time, the curing process is able to be controlled.

The binder can be chosen from the group consisting of phenol formaldehyde (PF), melamine formaldehyde (MF) or urea formaldehyde (UF), or a combination thereof. The use of phenol formaldehyde means that formalaldehyde is given off in comparatively low concentrations after curing and thus lowers the formalaldehyde concentration in the finished product. Phenol formaldehyde also has advantageous properties in terms of achieving good water resistance and is therefore particularly well suited when the finished product is intended for outdoor use.

The provided board of wood material has a structure with pockets, the step of pressing the composition into said board comprising pressing of the composition into the pockets. By filling the pockets, a denser structure of the board and a higher density are obtained. The denser structure gives better water resistance.

The step of pressing the composition into said board is realized by applying a mechanical pressure to said first main face. Application of a mechanical pressure means that a uniform pressure is applied to the surface of the board. The application of the mechanical pressure can be effected by means of a batch press. By batch press is meant a press in which a uniform pressure is applied to the whole of the main face and the pressure is maintained for a desired time. After this, the board is released from the press.

The step of pressing the composition into said board can comprise pressing the composition into at least one surface portion of said board. The surface portion thus obtains a higher density and better resistance to, for example, penetration of water and external attack. By varying the quantity of added binder, the extent of the surface portion in a direction orthogonal to the board to the first main face of the board is able to be varied.

The step of pressing the composition into said board can comprise pressing in the composition to a depth of penetration substantially equivalent to the thickness of said board. In this way, the properties of the board are improved throughout its cross section. A groove milled out in such a board extends only through a region having good water resistance. This reduces the risk of grain-raising and of water penetration adjacent to the groove.

The step of arranging said board on a draining surface can comprise arranging said board on a woven steel cloth. A woven steel cloth, a so-called wire gauze, forms a host of small holes in which liquid can collect. This thus makes it easier for liquid to be pressed out of the board in connection with the application of the pressure, so the composition comprising the binder can be pressed into the board.

Temperature, pressure and the time for which the board is subjected to pressure can be chosen such that the treated board acquires the desired properties. Temperature, time and pressure are variables which are chosen according to the chosen binder, the properties of the base material, the thickness of the base material, etc.

The method can further comprise the steps of arranging the composition comprising the binder also on a second main face of said board situated opposite the first main face. In this way, a board having improved properties such as higher density, higher impermeability and better water resistance in two surface portions of the board is obtained. It will be appreciated that the step can be carried out separately from the earlier steps in the method. For example, the composition can be arranged on a first main face, the board arranged on a draining surface, heat-treated, and the composition pressed into the board. After this, the composition can be arranged on a second main face, and the board once more arranged on a draining surface, heat-treated, and the composition pressed into the board.

The method can further comprise the steps of providing a further board of wood material, arranging the composition comprising the binder on a further main face, separate from said first main face, of one of the boards, which further main face is intended to be facing toward the second board. This produces a board element having two connected board layers. The cross section of the board element thus has two portions having improved properties, firstly adjacent to a first surface and secondly adjacent to an interface portion arranged adjacent to the mutually abutting board layers. Depending on the quantity of added binder, the portions can meet fully or in part. In this way, it is possible to treat a main face of a board in the same step as the board is connected to another board to form a board element having two board layers.

According to another aspect of the invention, a board element of veneer, plywood or made of wood fiber, such as HDF or MDF, comprising one or more board layers, which board element has two main faces and at least one side face, is provided, which board element comprises a binder, the binder being heterogeneously distributed in at least one of said one or more board layers.

The concentration of binder can be higher in a portion or layer associated with a main face of the board element.

The advantages described earlier in connection with the inventive method are also applicable to the board element according to the invention. The added binder gives the board element of wood material a harder and more resistant surface having improved properties as regards water resistance. The board element can be used for outer doors, windows, French windows, façade materials, joineries, surface coatings in wet rooms, etc. Depending on the concentration of binder, the board element can replace material such as bakelite in applications demanding high water resistance.

The concentration of binder can be higher in a portion associated with the first main face of the board element and in a portion associated with the second main face of the board element, compared with the concentration of binder in a central portion of the board element. Both main faces of the board element thus have a harder and more resistant surface having improved water resistance. The board element can further have a higher density compared with a conventional board element, depending on the chosen binder.

The concentration of binder can be higher in a portion associated with the first main face of the board element and in a portion associated with an interface portion of the board element, compared with the concentration of binder in a portion associated with a second main face of the board element. Such a board element includes two board layers, between which a composition containing binder has been applied and pressed into the board layers. The board element thus has a concentration of binder which is higher adjacent to the interface portion and adjacent to the first main face.

The concentration of binder can be higher in a portion associated with the first main face of a first board layer and in a portion associated with the second main face of a second board layer, as well as in a portion associated with an interface portion defined by the mutually abutting board layers, compared with an intermediate portion arranged between the portion associated with the first or second main face and the portion associated with the interface portion. Such a board element includes two board layers, between which a composition containing binder has been applied and pressed into the board layers. The binder-containing composition has also been applied to and pressed into at least one main face. The board element thus has a concentration of binder which is higher adjacent to the interface portion, as well as adjacent to the first main face and/or second main face of the respective board layer.

The board element can have a first portion comprising binder and a second portion without binder. Where the board element is a board element which has not previously been treated with binder, such as planks or boarding, the board element will have a portion comprising binder and another portion which has no binder.

The board element can have a first portion and a second portion, the concentration of binder in the first portion being higher than the concentration of binder in the second portion. If the board element, for example, is an MDF or HDF board element, the board element contains binder from the outset. Due to the fact that further binder has been added to the board element, the board element will have a portion having comparatively higher concentration of binder and a portion having comparatively lower concentration of binder.

The binder can be phenol formaldehyde. Phenol formaldehyde gives off comparatively lower formaldehyde concentrations when it has cured and gives a hard and durable surface having good water resistance.

For example, the board element can be an HDF element having a density of at least 1000 kg/m³.

### Brief description of the drawings

Embodiments of the present invention will be described below for illustrative purposes with reference to the appended drawings.
Figure 1 shows a board of wood material, such as an HDF board, an MDF board, a plywood board, planks or boarding.
Figure 2 shows a board element of wood material, such as an HDF board, an MDF board, a plywood board, planks or boarding, comprising a plurality of board layers.
Figure 3 shows a schematic cross-sectional view of a mechanical press for applying pressure for treatment of a board of wood material.
Figure 4 shows an enlarged part of a woven steel cloth.
Figure 5a shows a schematic cross-sectional view of a board of wood material treated with a composition comprising a binder.
Figure 5b shows the board shown in figure 5a, in more detail.
Figure 6a shows a schematic cross-sectional view of a board treated with a composition comprising a binder.
Figure 6b shows the board shown in figure 6a, in more detail.
Figure 7a shows a schematic cross-sectional view of a board in which two surface portions are treated with a composition comprising binder.
Figure 7b shows the board shown in figure 7a, in more detail.
Figure 8a shows a schematic cross-sectional view of a board element comprising two board layers having a surface portion and an interface portion which are treated with a composition comprising a binder.
Figure 8b shows the board element shown in figure 8a, in more detail.
Figure 9a shows a cross-sectional view of a board element comprising two board layers having two surface portions and an interface portion which are treated with a composition comprising a binder.
Figure 9b shows the board element shown in figure 9a, in more detail.

### Detailed description

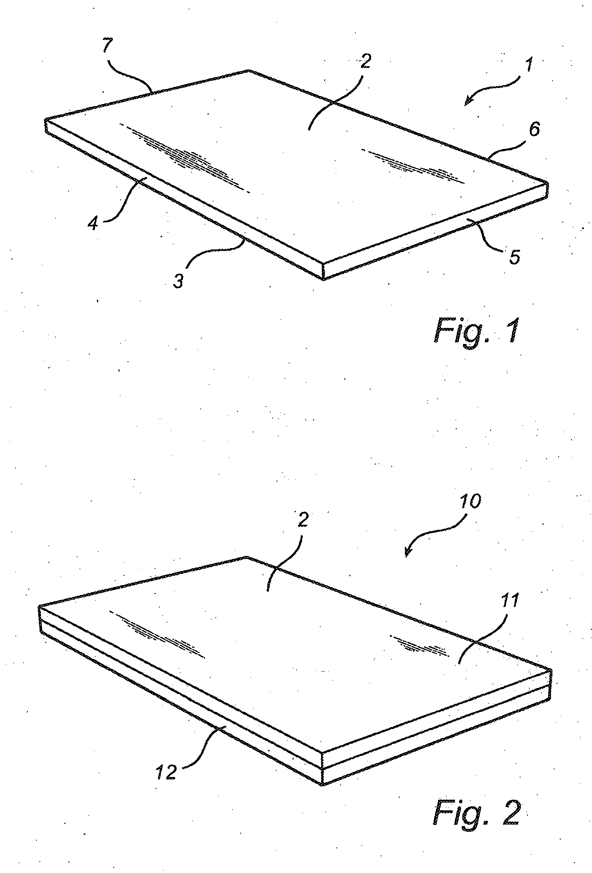

In figure 1 is shown a board 1. The board 1 has a rectangular shape. The board 1 is made of wood material and has two opposing main faces 2, 3 and four side faces 4, 5, 6, 7. The main faces 2, 3 can be parallel. Alternatively, the board can have a circular shape, a triangular shape, or can have another shape having at least one side face.

The board 1 of wood material can be a board of wood fiber or a board derived from timber. Examples of boards made from wood fiber are MDF (medium density fiberboard) and HDF (high density fiberboard). Examples of boards derived directly from timber are planks, boards and veneer.

The board 1 of wood material can consist of one board layer, or a plurality of board layers 11, 12 which together form a board element 10 of wood material. Such a board element 10 is shown in figure 2. The board element has two main faces and at least one side face. The thickness of the board element can be varied with the number of board layers 11, 12 possessed by the board element 10. A board layer 11, 12 can have a thickness, for example, of 2-6 mm. It will be appreciated that what is described for a board 1 can also be applied to a board element 10 and vice versa.

Boards 1 of wood fiber material such as MDF and HDF can be manufactured in a wet or dry process. In both processes, binder is added to bind the wood fibers together. In a wet process, wood fiber and a composition comprising binder and water are mixed into a paste. The binder is cured and the wood fibers are compressed in a press, at the same time as the water is pressed out of the paste. A drawback with the wet process is that binder accompanies the water out of the paste, which places high demands on the cleaning of the residual products from the process.

At present, however, the dry process is more commonly found. In a dry process, wood fiber is mixed with a binder. With current manufacturing technology and current production speed demands, the wood fibers are compressed and binder is cured in a continuous process. By continuous process is meant that the paste is arranged on a belt which moves continuously along a track. A plurality of rotating, cylindrical rollers apply a pressure to the paste. At the same time, heat can be supplied in order to accelerate the curing process of the binder.

The binder which is used in the two processes can be phenol formaldehyde (PF), melamine formaldehyde (MF), or a combination thereof.

An HDF board produced according to a dry process of this kind can have a density of, for example, 970±30 kg/m³. One example of such an HDF board is Ultrales H10 from Lesonit.

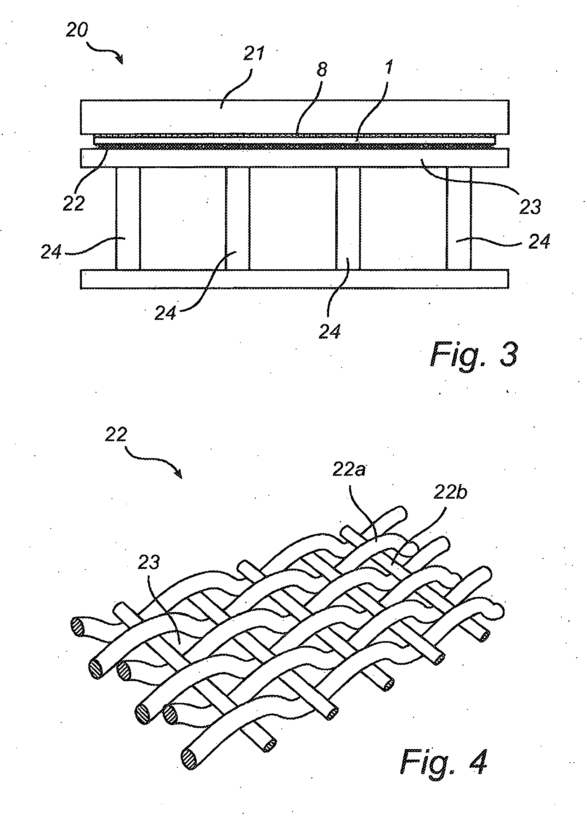

A method according to the invention for treating a board 1 of wood material will be described with reference to figure 3. A board 1 of wood material of the above-described type is used as the base material for the inventive method. The board 1 can be a planed or sawn board or plank, or a prefabricated MDF board, HDF board or plywood board. The method can therefore be carried out separately from the production process for the board 1 of wood material which is used as the base material.

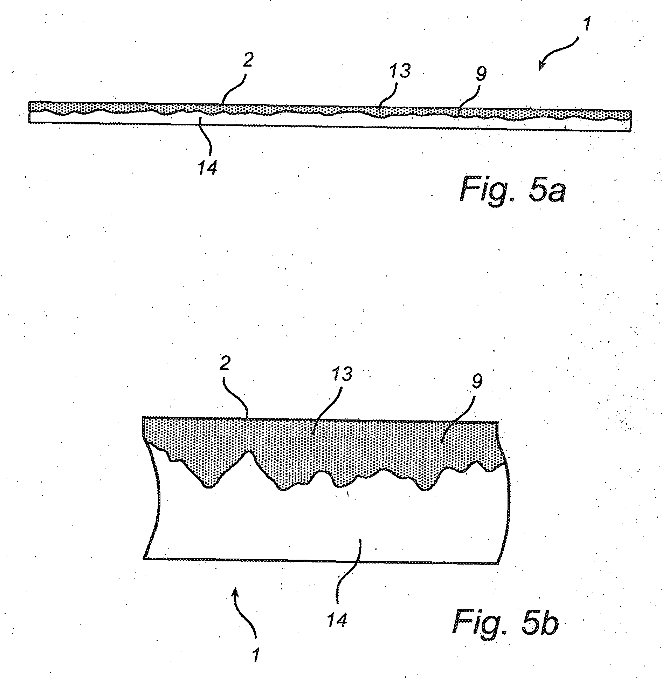

The method comprises providing a board 1 of wood material. A composition 8 comprising a binder 9 (which can be seen, for example, from figures 5a and 5b) is arranged on a first main face 2 of the board 1. The composition 8 comprises binder 9 diluted in a liquid, for example water. The binder 9 can be chosen from the group consisting of phenol formaldehyde (PF), melamine formaldehyde (MF) or urea formaldehyde (UF), or a combination thereof. It is also possible to use other binders, such as other polymers and, in particular, other thermosetting plastics. Preferably, the binder 9 is phenol formaldehyde.

The board 1 is placed on a draining surface 22. The draining surface 22 acts also as a base for the board 1 during pressing. The draining surface 22 can be a woven steel cloth. The woven steel cloth is woven from longitudinal and transverse steel wires 22a, 22b, as shown in greater detail in figure 4. The woven steel cloth forms a host of small pockets 23, in which liquid can be transported away. For example, the steel wire 22a, 22b with which the woven steel cloth is woven can be such that seven pockets 23 are formed per centimeter and the wire thickness is 5 mm (type 7/5). The draining surface 22 can be placed directly beneath the board 1. Alternatively, an intermediate water-permeable layer can be arranged between the board 1 and the woven steel cloth 22. In other embodiments, the draining surface can be a perforated plate, a bed of sand, a low-density board, or some other draining surface which can drain away moisture or alternatively retain moisture within itself.

The board 1 and the composition 8 arranged on the board 1 are subjected to a heat treatment. The temperature which the board shall reach by means of the heat treatment can be chosen according to the curing temperature of the chosen binder. The effect of the heat treatment is that the composition flees from the heat and down through the board 1. The draining surface 22 offers a passage through the board 1 for the liquid or vaporous part of the composition 9. The heat treatment, which helps to vaporize the liquid part, for example water, of the composition takes place over a period of time. The binder 8 remains in the board 1.

The composition 8 is pressed into the board 1 in connection with the heat treatment. The pressing of the composition into the first main face 2 can be realized by application of a mechanical pressure to the board 1. The pressing of the composition 8 into the board 1 can also be realized by means of vacuum or in some other way which prevents the composition 8 from taking a path other than through the board 1.

Should a mechanical pressure be applied to the board 1, the board 1 is arranged in a mechanical press 20, as is shown in figure 3. The board 1 is arranged on the draining surface 22, which in turn is arranged on a pressure surface 23 acted on by a number of rams 24. In the pressing process, the rams 24 push the pressure surface 23, and thus the board 1, against an above-lying counterpressure surface 21. Thus, a mechanical pressure is applied to the main face 2 of the board 1, on which the composition 8 comprising the binder 9 is arranged. The heat treatment can be realized simultaneously with the pressing, by the counterpressure surface 21 and/or the pressure surface 23 being heated to a certain temperature. By virtue of the fact that the board 1 is arranged on a draining base 22 and that the board 1 and the composition 8 arranged thereon are subjected to heat, the composition 8 will filter through the structure of the board 1, for example through a pocketed or cavitied structure of the board. The liquid part of the composition 8, for example water, is allowed to be transported away from the board 1 by virtue of the draining base 22. The binder 9 in the composition 8 is thus also pressed down into the structure of the board 1. The binder 9 wholly or partially fills remaining pockets in the structure of the board 1. The binder 9 will gradually cure.

By varying the quantity of binder 9 per unit of area of the board 1 and per thickness of the board 1, it is possible to vary how much binder 9 and how far down the binder 9 permeates in a direction orthogonal to the main face of the board 1. It is thus also possible to regulate how big an improvement shall be made in the water resistance of the board 1. The greater the quantity of binder 9, the harder is the surface coating and the higher is the resistance to external attack, for example improved water resistance is obtained of the board. If the binder 9 has higher density than the board 1, which is the case if phenol formaldehyde is added to an MDF or HDF board, the treatment results in an increase also in the density of the treated board.

On the main face 2 on which the composition comprising the binder 9 is arranged, the binder 9 forms a protective surface.

As mentioned earlier, the board 1 is also subjected to heat in connection with the pressing of the composition 8 into the board 1. Apart from the fact that the heat causes vaporization of the liquid part of the composition, the heat accelerates the curing process of the binder 9. According to one example in which phenol formaldehyde is used as the binder, a 4 mm thick HDF board is heat-treated to the point where the board 1 reaches a temperature of at least 130°C, whereupon the board 1 is subjected to a pressure of at least 30 MPa. The person skilled in the art will appreciate that the variables of time, temperature and pressure interact and can be varied in relation to one another. It will also be appreciated that variables such as time, temperature and pressure can be varied according to the size and thickness of the board 1, as well as the quantity of added composition 8 and the choice of binder 9. The temperature is, inter alia, dependent on which binder 9 is used, and its curing temperature.

If the board 1 of wood material is an HDF board or an MDF board, there is already binder present in the board 1, which binder connects the wood fibers to one another. In the material, depending on the density of the board 1, air-containing pockets or cavities are found between the wood fibers and the binder. The lower the density, the more pockets are possessed by the board material. It is these cavities which are filled with binder when the board 1 is treated in accordance with the method. In this way, the density is increased and the water resistance and surface hardness of the board are improved. The binder or binders which is/are used to form the HDF or MDF board can be different from the binder 9 or binders 9 which are used in the treatment of the board 1 in accordance with the inventive method.

A treated board 1 or a treated board element 10 comprising one or more board layers 11, 12 can thus be obtained. A board 1 which has been treated in this way is shown in figure 5a and 5b, to which reference is now made. The subsequently added binder 9 has penetrated into the board 1 in a direction away from the main face 2, 3, in which the composition 8 containing the binder 9 has been applied. As is apparent, the binder 9 is heterogeneously distributed in the board 1. The concentration of binder 9 can be higher in a portion or layer 13 associated with the main face 2, 3 on which the composition 8 comprising the binder 9 is arranged. The layer or the portion 13 has a continuous extent. The concentration of binder 9 can be decreasing in a direction away from the first main face 2.

Where the board element 10 is an HDF or MDF board element, the board element 10 can have a first portion or layer 13 having a first concentration of binder 9, and a second portion or layer 14 having a second concentration of binder 9, as is shown in figure 5a. The concentration of binder 9 in the first portion or layer 13 can then be higher than in the second layer 14. The second portion or layer 14 can have the structure and concentration of binder possessed by the base material, i.e. a conventional HDF or MDF board. The higher concentration of binder 9 in the first layer 13 is a result of the supplied binder 9 which has been pressed into the board 1. For example, the concentration of binder in the second layer 14 can be 10-12% (relates to dry weight), while the concentration of binder in the first layer 13 can be 15-25%.

Where the board 1 is a board or plank, the board has a first portion or layer 13 comprising binder 9 and a second portion or layer 14 without binder.

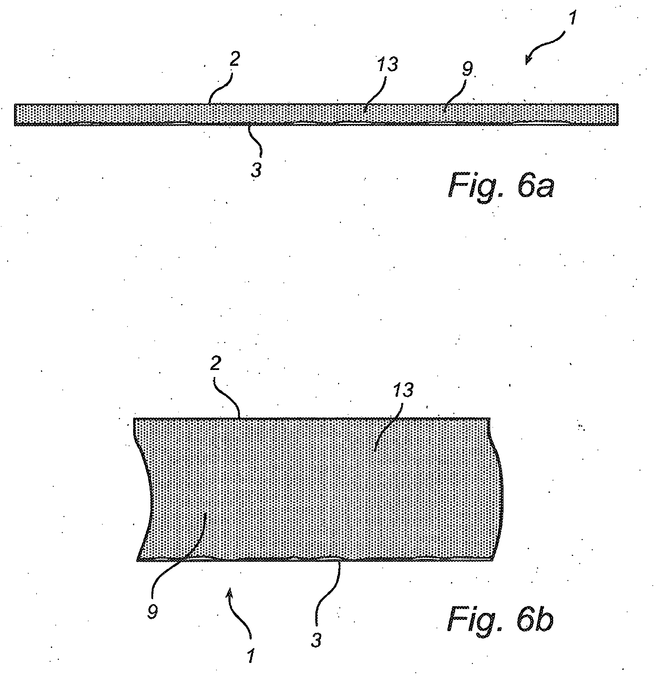

Alternatively, binder 9 can be added in such quantity and under such pressure that the layer 13 having a higher concentration of binder extends substantially through the entire thickness of the board 1, as is shown in figure 6a and 6b. In this case, the treated board 1 does not have a first and a second portion or layer 13, 14, but essentially one portion or layer 13.

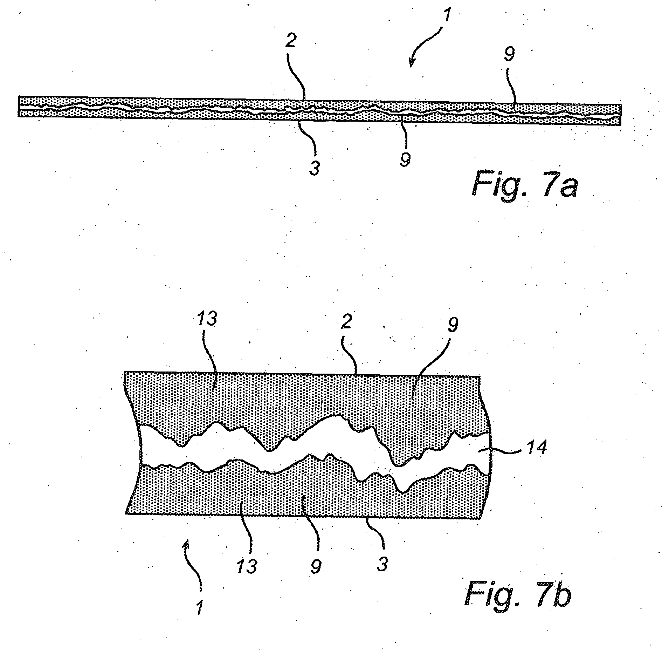

According to one embodiment, the composition 8 is first arranged on a first main face 2 and is pressed into the board 1 in the above-described manner. After this, the composition 8 comprising the binder 9 is arranged on a second main face 3 situated opposite the first main face 2. Next, the board 1 is arranged once more on the draining surface 22 and the composition 9 is pressed once more into the board 1 as the board is subjected to heat treatment in the above-described manner. In this way, a board 1 or board element 10 comprising a plurality of board layers 11, 12 having better resistance and possibly still higher density, depending on the chosen binder, is obtained. Such a board 1 is shown in figure 7a and 7b, to which reference is now made. By virtue of the double application of the composition 8 comprising the binder 9, still more binder 9 has been pressed into the board 1.

A board 1 of the kind shown in figure 7a and 7b thus has a heterogeneous distribution of the binder 9. The concentration of binder 9 is higher in a layer or portion 13 associated with the first main face 2 and in a layer or portion 13 associated with the second main face 3 of the board 1. The concentration of binder 9 is therefore highest adjacent to the main faces 2, 3 of the board and lowest toward the center of the board 1. The layers or portions 13 each have a continuous extent.

Where the board is an MDF or HDF board, the board 1 thus has two layers or portions 13 in which the concentration of binder 9 is higher than the concentration of binder in a second layer or portion 14. Alternatively, for example when the board has not previously been treated with a binder, there is no binder in the second layer 14, as has been described above in connection with figure 5a and 5b.

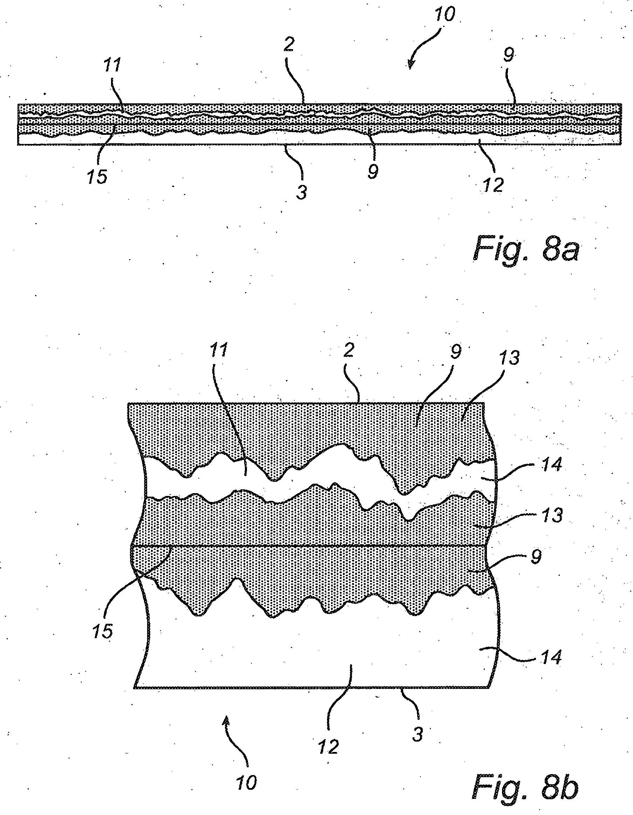

According to a further embodiment, the composition 8 comprising the binder 9 is arranged on a first main face 2 of a first board 11. The composition 8 comprising the binder 9 is applied also to a second main face of the first board 11 or to a main face of a second board 12 intended to be facing toward the second main face of the first board 11. The first board 11 is arranged on the second board 12 and is placed on a draining base 22. After this, the composition 9 is pressed into the boards 11, 12 as the boards are subjected to heat treatment in the above-described manner. A board element 10 comprising two mutually connected board layers 11, 12 is thus obtained. Such a board element 10 is shown in figure 8a and 8b, to which reference is now made. The board layers 11, 12 are connected and the composition 8 containing the binder 9 is pressed into the board layers 11, 12 in one step.

A board element 10 of the kind shown in figure 8a and 8b thus has a heterogeneous distribution of the binder 9 in the board layers 11, 12. By heterogeneous distribution is meant for this and other embodiments a heterogeneous distribution of binder which has penetrated into the actual board layer, and not just a glue line arranged between board layers. The concentration of binder 9 is higher in a layer or portion 13 associated with the first main face 2 of the board 1 and in a layer or portion 13 associated with an interface portion 15 defined by the mutually abutting main faces of the two board elements 11, 12. The layers or portions 13 each have a continuous extent. Where the board element is an MDF or HDF board element, the board element 10 thus has two layers or portions 13 in which the concentration of binder 9 is higher than the concentration of binder in two second layers or portions 14. Alternatively, for example when the board element 10 has not previously been treated with a binder, there is no binder in the second layers 14, as has been described above. Furthermore, the person skilled in the art will appreciate that the same process can be used to produce a board element 11 with still more board layers. Such a board element 10 has further resistance to water penetration, since more binder has penetrated into the board element.

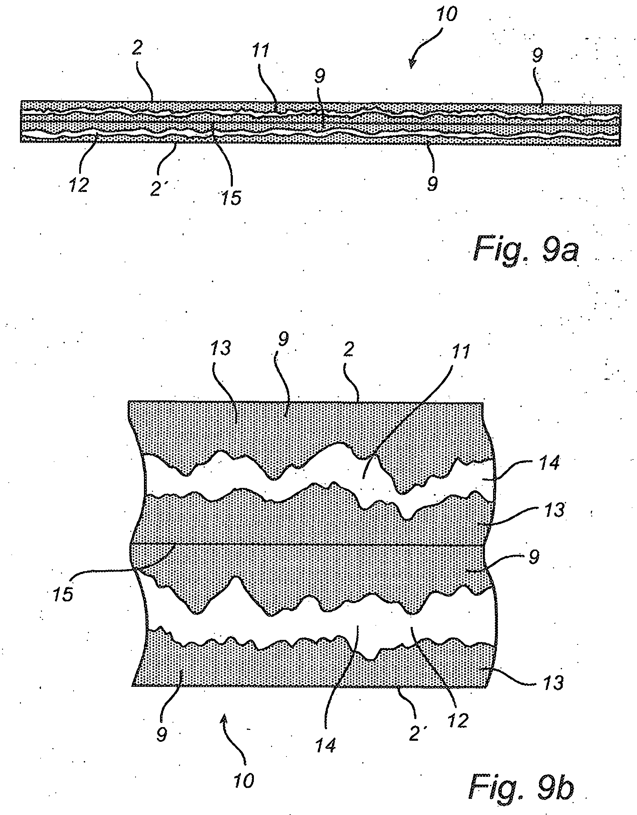

According to a further embodiment, the composition 8 comprising the binder 9 is arranged on a first main face 2 of a first board 11. The first board 11 is arranged on a draining base 22 and the composition 8 is pressed into the first board 11. The composition 8 containing the binder 9 is then arranged also on a first main face 2' of a second board 12, as well as on a second main face of the first or second board 11, 12, alternatively on both boards. The boards 11, 12 are arranged one upon the other, with the surface bearing the composition 8 facing toward the second board. The boards 11, 12 are arranged on a draining base 22 and the composition 8 is pressed into the boards 11, 12 as the board is subjected to heat treatment in the above-described manner. A board element 10 comprising two mutually connected board layers 11, 12 is thus obtained, as is shown in figure 9a and 9b.

A board element 10 of the kind shown in figure 9a and 9b hence has a heterogeneous distribution of the binder 9 in the board layers 11, 12. The concentration of binder is higher in a layer or portion 13 associated with the main face 2 of a first board layer 11 and in a layer or portion 13 associated with the main face 2' of a second board layer 12, as well as in a layer or portion 13 associated with an interface portion 15 defined by the mutually abutting board layers 11, 12. The layers or portions 13 each have a continuous extent.

Where the board element 10 is an MDF or HDF board element 10, the board element 10 thus has three layers or portions 13 in which the concentration of binder 9 is higher than the concentration of binder in two second layers or portions 14. Alternatively, for example when the board element 10 has not previously been treated with a binder, there is no binder in the second layers 14, as has been described above. Depending on the quantity of applied binder 9 which has been pressed into the board layers 11, 12 from different directions, the layers having added binder can meet. In such a case, the board element 10 has no second layer or portion 14 after the treatment. Due to the further increased concentration of binder 9 which has been pressed into the board element 10, the board element 10 acquires an increased resistance to penetration of, for example, water.

Furthermore, the person skilled in the art will appreciate that the board element can be formed by at least one board layer with a heterogeneous distribution of the binder 9, as well as one or more board layers with a homogeneous distribution of binder 9 and/or one or more board layers without binder. In such an embodiment, only one board layer is treated in accordance with the present invention. One example of such a board element is a board element formed by a board layer with a heterogeneous distribution of binder 9, for example as shown in figure 5a-b, connected, for example by gluing, to one or more board layers with a homogeneous distribution of binder or wholly without binder. For example, an HDF board, MDF board or other board treated in accordance with the invention can be glued to an untreated HDF board, MDF board, veneer, plank, for the formation of a board element. The board element hence has an outer portion or layer having improved properties. Board layers of different base materials, different properties and different thickness can hence be connected to each other to form a board element.

According to one embodiment, the board element is formed by a board layer of veneer and a board layer of, for example, HDF or MDF. The thickness of the board layer of veneer can be less than the thickness of the board layer of HDF or MDF. The board layer of veneer is treated in accordance with the present invention. The board layer of veneer is connected, for example by gluing, to the underlying board layer of, for example, MDF or HDF. Preferably, the board layers are connected to each other and the composition 8 containing the binder 9 is pressed into the board layers in one step, as has previously been described with reference to figure 8a-b. In such an embodiment, the composition 8 comprising the binder 9 is arranged on a first main face 2 of a first board, for example a board of veneer. The composition 8 comprising the binder 9 is also applied to a second main face of the first board or to a main face of a second board, for example an MDF or HDF board, intended to be facing toward the second main face of the first board. The first board is arranged on the second board and is placed on a draining surface 22. After this, the composition 9 is pressed into the boards as the boards are subjected to heat treatment in the above-described manner. A board element comprising two mutually connected board layers is thus obtained, such as a board element having a surface layer of veneer and a core of MDF or HDF. Such a board element can be used, for example, as a floorboard or in furniture applications.

### Examples

According to one example, 200 g of a composition containing 40% binder and 60% water is added to an HDF board. The binder is phenol formaldehyde and the phenol formaldehyde concentration corresponds to 80 g phenol formaldehyde. The HDF board has an original density of 970 kg/m³ and the main face of the HDF board is 1 m² in size. The thickness of the HDF board is 4 mm. The composition containing 80 g phenol formaldehyde is applied to the main face of the HDF board and pressed into the HDF board by means of an application of mechanical pressure of 30 MPa for three minutes in the above-described manner. After this treatment, the HDF board acquires a density of 1050 kg/m³.

The following examples illustrate how the swelling of an HDF board diminishes after treatment in accordance with the inventive method, due to the improved water resistance. A conventional HDF board of 4 mm thickness is laid in a water bath in which the water maintains a temperature of 20°C for 24 hours. After 24 hours, the amount of swelling of the HDF board is measured as a ratio between the thickness of the HDF board after the water bath relative to the thickness before the water bath. This HDF board has a degree of swelling of 16%.

An HDF board of 4 mm thickness has been treated with 300 g/m² of a composition containing 40% binder and 60% water in accordance with the above method. The HDF board has been treated with the composition on a first main face, in much the same way as is shown in figure 5a and 5b. The concentration of binder corresponds to 120 g binder per m². The binder is in the form of phenol formaldehyde. The treated HDF board has been laid in a water bath in which the water maintains a temperature of 20°C for 24 hours. This treated HDF board has after 24 hours a swelling of 11% measured in the above-described manner.

An HDF board of 4 mm thickness has been treated with 600 g/m² of a composition containing 40% binder and 60% water in accordance with the above method. The HDF board has been treated with the composition on a first and a second main face, in much the same way as is shown in figure 7a and 7b. The concentration of binder corresponds to 240 g binder per m². The binder is in the form of phenol formaldehyde. The treated HDF board has been laid in a water bath in which the water maintains a temperature of 20°C for 24 hours. This treated HDF board has after 24 hours a swelling of 6% measured in the above-described manner.

An HDF board of 4 mm thickness has been treated with 1200 g/m² of a composition containing 40% binder and 60% water in accordance with the above method. The HDF board comprises two board layers of 2 mm each and has been treated with the composition on a first main face and in an interface portion between the first and the second board layer in much the same way as is shown in figure 8a and 8b. The concentration of binder corresponds to 480 g binder per m². The binder is in the form of phenol formaldehyde. The treated HDF board has been laid in a water bath in which the water maintains a temperature of 20°C for 24 hours. This treated HDF board has after 24 hours a swelling of 2% measured in the above-described manner.

According to a further aspect which is not the subject of the present invention, it is possible, for certain types of board configurations and board materials, to press compositions into the board without arranging the board on a draining surface or base. It is especially possible in the treatment of lower density boards, such as MDF and chipboard, since the moisture which is supplied to the board in the form of the composition can remain in the board and the board is allowed to swell. In these cases, the board acts per se as a drain or draining surface. This is also especially possible in the treatment of boards of greater thickness.

Such a method for treating a board made of wood fiber such as MDF, chipboard, particle board, comprises the steps of providing a board, arranging a composition comprising a binder on a first main face of said board, heat-treating said board and the composition arranged thereon, and pressing the composition into said board. Excepting the fact that the board is not arranged on a draining base but rather acts per se as a drain, the above description is also applicable to this further aspect. It will be appreciated that the above-described examples and embodiments should not be regarded as a limiting recital, but should merely be regarded as examples of possible applications.

Furthermore, it will also be appreciated in accordance with the present invention that it is possible to just arrange a composition comprising the binder on a main face which is arranged to bear against another board in order to join together two board layers to form a board element. After this, the boards are pressed in the above-described manner.

Consequently, a number of modifications and variations are possible, so that the scope of the invention is therefore exclusively defined by the appended claims.

## Claims

1. A method for treating a board (1) of wood material, such as an HDF board, an MDF board, a plywood board, veneer, planks or boarding, comprising the steps of:
providing a board (1) of wood material,
arranging a composition (8) comprising a binder (9) on a first main face (2) of said board (1),
arranging said board (1) on a draining surface (22),
heat-treating said board (1) and the composition (8) arranged thereon, and
pressing the composition (8) into said board (1).

2. The method as claimed in claim 1, wherein the binder (9) is chosen from the group consisting of phenol formaldehyde (PF), melamine formaldehyde (MF) or urea formaldehyde (UF), or a combination thereof.

3. The method as claimed in claim 1 or 2, which provided board (1) of wood material has a pocketed structure, wherein the step of pressing the composition (8) into said board (1) comprises pressing the composition (8) into the pockets.

4. The method as claimed in any one of claims 1-3, wherein the step of pressing the composition (8) into said board (1) is realized by applying a mechanical pressure to said first main face (2).

5. The method as claimed in any one of claims 1-4, wherein the step of pressing the composition (8) into said board (1) comprises pressing the composition (8) into at least one surface portion of said board (1).

6. The method as claimed in any one of claims 1-5, wherein the step of pressing the composition (8) into said board (1) comprises pressing in the composition (8) to a depth of penetration substantially equivalent to the thickness of said board (1).

7. The method as claimed in any one of claims 1-6, wherein the step of arranging said board (1) on a draining surface (22) comprises arranging said board on a woven steel cloth.

8. The method as claimed in any one of claims 1-7, further comprising the steps of arranging the composition (8) comprising the binder (9) also on a second main face (3) of said board (1) situated opposite the first main face (2).

9. The method as claimed in any one of claims 1-8, further comprising the steps of providing a further board (12) of wood material, arranging the composition (8) comprising the binder (9) on a further main face (3), separate from said first main face (2), of one of said boards (1), which further main face (3) is intended to be facing toward the other board (12).

10. A treated board element (10) of veneer, plywood or made of wood fiber, such as HDF or MDF, comprising one or more board layers (11, 12),
which treated board element (10) has two main faces (2, 3) and at least one side face (4, 5, 6, 7),
which treated board element (10) comprises a binder (9) which has been pressed into the treated board element (10) via a main face (2) of the board element (10) during a treatment process, the binder (9) being heterogeneously distributed in at least one of said one or more board layers (11, 12).

11. A treated board element (10) as claimed in claim 10, wherein the concentration of binder (9) is higher in a portion (13) associated with the first main face (2) of the treated board element (10) and in a portion (13) associated with the second main face (3) of the treated board element (10), compared with the concentration of binder (9) in a central portion (14) of the treated board element.

12. A treated board element (10) as claimed in claim 10 or 11, wherein the concentration of binder (9) is higher in a portion (13) associated with the first main face (2) and in a portion (13) associated with an interface portion (15) of the treated board element (10), compared with the concentration of binder (9) in a portion (14) associated with a second main face (3) of the treated board element (10).

13. A treated board element as claimed in claim 10, wherein the concentration of binder (9) is higher in a portion (13) associated with the first main face (2) of a first board layer (11) and in a portion (13) associated with the second main face (2') of a second board layer (12), as well as in a portion (13) associated with an interface portion (15) defined by the mutually abutting board layers (11, 12), compared with an intermediate portion (14) arranged between the portion (13) associated with the first or second main face (2, 2') and the portion (13) associated with the interface portion (15).

14. A treated board element (10) as claimed in any one of claims 10-13, wherein the treated board element (10) has a first portion (13) comprising binder (9) and a second portion (14) without binder (9).

15. A treated board element (10) as claimed in any one of claims 10-13, wherein the treated board element (10) has a first portion (13) and a second portion (14), the concentration of binder (9) in the first portion (13) being higher than the concentration of binder in the second portion (14).

16. A board element (10) as claimed in any one of claims 10-15, wherein the binder (9) is phenol formaldehyde.

## Patentansprüche

1. Verfahren zur Behandlung eines Bretts (1) aus einem Holzmaterial, wie beispielsweise eines HDF-Bretts, eines MDF-Bretts, eines Sperrholzbretts, eines Furnierbretts, von Bohlen oder einer Verschalung, mit den folgenden Schritten:
Bereitstellen eines Bretts (1) aus einem Holzmaterial,
Anordnen einer Zusammensetzung (8), die ein Bindemittel (9) enthält, auf einer ersten Hauptfläche (2) des Bretts (1),
Anordnen des Bretts (1) auf einer Drainagefläche (22),
Wärmebehandeln des Bretts (1) und der darauf angeordneten Zusammensetzung (8), und
Pressen der Zusammensetzung (8) in das Brett (1).

2. Verfahren nach Anspruch 1, wobei das Bindemittel (9) aus der Gruppe gewählt wird, zu der Phenolformaldehyd (PF), Melaminformaldehyd (MF) oder Harnstoffformaldehyd (UF), oder eine Kombination davon gehören.

3. Verfahren nach Anspruch 1 oder 2, wobei das bereitgestellte Brett (1) aus einem Holzmaterial eine mit Hohlräumen versehene Struktur aufweist, wobei der Schritt des Pressens der Zusammensetzung (8) in das Brett (1) ein Pressen der Zusammensetzung (8) in die Hohlräume umfasst.

4. Verfahren nach einem beliebigen der Ansprüche 1-3, wobei der Schritt des Pressens der Zusammensetzung (8) in das Brett (1) durch Ausüben eines mechanischen Drucks auf die erste Hauptfläche (2) erreicht wird.

5. Verfahren nach einem beliebigen der Ansprüche 1-4, wobei der Schritt des Pressens der Zusammensetzung (8) in das Brett (1) ein Pressen der Zusammensetzung (8) in wenigstens einen Flächenabschnitt des Bretts (1) umfasst.

6. Verfahren nach einem beliebigen der Ansprüche 1-5, wobei der Schritt des Pressens der Zusammensetzung (8) in das Brett (1) ein Pressen (8) bis zu einer Eindringtiefe umfasst, die im Wesentlichen äquivalent zu der Dicke des Bretts (1) ist.

7. Verfahren nach einem beliebigen der Ansprüche 1-6, wobei der Schritt des Anordnens des Bretts (1) auf einer Drainagefläche (22) ein Anordnen des Bretts auf einem Stahlgeflecht umfasst.

8. Verfahren nach einem beliebigen der Ansprüche 1-7, ferner mit dem Schritt eines Anordnens der Zusammensetzung (8), die das Bindemittel (9) enthält, auch auf einer zweiten Hauptfläche (3) des Bretts (1), die der ersten Hauptfläche (2) gegenüberliegt.

9. Verfahren nach einem beliebigen der Ansprüche 1-8, wobei zu dem Verfahren ferner die Schritte gehören: Bereitstellen eines weiteren Bretts (12) aus einem Holzmaterial, Anordnen der Zusammensetzung (8), die das Bindemittel (9) enthält, auf einer von der ersten Hauptfläche (2) getrennten weiteren Hauptfläche (3) eines der Bretter (1), wobei die weitere Hauptfläche (3) dazu bestimmt ist, dem weiteren Brett (12) zugewandt zu sein.

10. Behandeltes Brettelement (10) aus Furnier, Sperrholz oder Holzfaser, wie beispielsweise HDF oder MDF, das eine oder mehrere Brettschichten (11, 12) aufweist,
wobei das behandelte Brettelement (10) zwei Hauptflächen (2, 3) und mindestens eine Seitenfläche (4, 5, 6, 7) aufweist,
wobei das behandelte Brettelement (10) ein Bindemittel (9) enthält, das während eines Behandlungsvorgangs über eine Hauptfläche (2) des Brettelements (10) in das behandelte Brettelement (10) gepresst wurde, wobei das Bindemittel (9) in wenigstens einer der einen oder mehreren Brettschichten (11, 12) ungleich verteilt ist.

11. Behandeltes Brettelement (10) nach Anspruch 10, wobei die Konzentration des Bindemittels (9) in einem Abschnitt (13), der der ersten Hauptfläche (2) des behandelten Brettelements (10) zugeordnet ist, und in einem Abschnitt (13), der der zweiten Hauptfläche (3) des behandelten Brettelements (10) zugeordnet ist, im Vergleich zu der Konzentration des Bindemittels (9) in einem mittigen Abschnitt (14) des behandelten Brettelements höher ist.

12. Behandeltes Brettelement (10) nach Anspruch 10 oder 11, wobei die Konzentration des Bindemittels (9) in einem Abschnitt (13), der der ersten Hauptfläche (2) zugeordnet ist, und in einem Abschnitt (13), der einem Zwischenabschnitt (15) des behandelten Brettelements (10) zugeordnet ist, im Vergleich zu der Konzentration des Bindemittels (9) in einem Abschnitt (14), der einer zweiten Hauptfläche (3) des behandelten Brettelements (10) zugeordnet ist, höher ist.

13. Behandeltes Brettelement nach Anspruch 10, wobei die Konzentration des Bindemittels (9) in einem Abschnitt (13), der der ersten Hauptfläche (2) einer ersten Brettschicht (11) zugeordnet ist, und in einem Abschnitt (13), der der zweiten Hauptfläche (2') einer zweiten Brettschicht (12) zugeordnet ist, sowie in einem Abschnitt (13), der einem Zwischenabschnitt (15) zugeordnet ist, der durch die wechselseitig angrenzenden Brettschichten (11, 12) definiert ist, im Vergleich zu einem Mittelabschnitt (14), der zwischen dem Abschnitt (13), der der ersten oder zweiten Hauptfläche (2, 2') zugeordnet ist, und dem Abschnitt (13) angeordnet ist, der dem Zwischenabschnitt (15) zugeordnet ist, höher ist.

14. Behandeltes Brettelement (10) nach einem beliebigen der Ansprüche 10-13, wobei das behandelte Brettelement (10) einen ersten Abschnitt (13), der das Bindemittel (9) enthält, und einen zweiten Anteil (14) ohne Bindemittel (9) aufweist.

15. Behandeltes Brettelement (10) nach einem beliebigen der Ansprüche 10-13, wobei das behandelte Brettelement (10) einen ersten Abschnitt (13) und einen zweiten Abschnitt (14) aufweist, wobei die Konzentration des Bindemittels (9) in dem ersten Abschnitt (13) höher ist als die Konzentration des Bindemittels in dem zweiten Abschnitt (14).

16. Brettelement (10) nach einem beliebigen der Ansprüche 10-15, wobei das Bindemittel (9) Phenolformaldehyd ist.

## Revendications

1. Procédé de traitement d'un panneau (1) à base de bois, comme un panneau en HDF, un panneau en MDF, un panneau en contreplaqué, un panneau en bois de placage, en madrier ou en planche comprenant les étapes de :
prévision d'un panneau (1) en matériau à base de bois,
disposition d'une composition (8) contenant un liant (9) sur une face principale (2) dudit panneau (1),
disposition dudit panneau (1) sur une surface de drainage (22), traitement thermique dudit panneau (1) et de la composition (8) disposée dessus, et
compression de la composition (8) dans ledit panneau (1).

2. Procédé selon la revendication 1, dans lequel le liant (9) est choisi dans le groupe composé du phénol formaldéhyde (PF), de la mélanine formaldéhyde (MF) de l'urée formaldéhyde (UF), ou leurs combinaisons.

3. Procédé selon la revendication 1 ou 2, lequel panneau prévu (1) en matériau à base de bois a une structure en poches, l'étape de compression de la composition (8) dans ledit panneau (1) comprenant la compression de la composition (8) dans les poches.

4. Procédé selon l'une quelconque des revendications 1 à 3, dans lequel l'étape de compression de la composition (8) dans ledit panneau (1) est réalisée en appliquant une pression mécanique sur ladite première face principale (2),

5. Procédé selon l'une quelconque des revendications 1 à 4, dans lequel l'étape de compression de la composition (8) dans ledit panneau (1) comprend la compression de la composition (8) dans au moins une partie de la surface dudit panneau (1).

6. Procédé selon l'une quelconque des revendications 1 à 5, dans lequel l'étape de compression de la composition (8) dans ledit panneau (1) comprend la compression dans la composition (8) jusqu'à une profondeur de pénétration sensiblement équivalente à l'épaisseur dudit panneau (1).

7. Procédé selon l'une quelconque des revendications 1 à 6, dans lequel l'étape de disposition dudit panneau (1) sur une surface de drainage (22) comprend la disposition dudit panneau sur une toile en acier tissé.

8. Procédé selon l'une quelconque des revendications 1 à 7, comprenant en outre les étapes de disposition de la composition (8) comprenant le liant (9) également sur une seconde face principale (3) dudit panneau (1) située à l'opposé de la première face principale (2).

9. Procédé selon l'une quelconque des revendications 1 à 8, comprenant en outre les étapes de prévision d'un autre panneau (12) en matériau à base de bois, la disposition de la composition (8) comprenant le liant (9) sur une autre face principale (3) séparée de ladite première face principale (2) d'un desdits panneaux (1), laquelle autre face principale (3) est destinée à être tournée vers l'autre panneau (12).

10. Élément de panneau traité (10) en bois de placage, contreplaqué ou composé de fibres de bois, comme du HDF ou MDF, comprenant une ou plusieurs épaisseurs de panneau (11, 12),
lequel élément de panneau traité (10) comporte deux faces principales (2, 3) et au moins une face latérale (4, 5, 6, 7),
lequel élément de panneau traité (10) comprend un liant (9) qui a été compressé dans l'élément de panneau traité (10) via une face principale (2) de l'élément de panneau (10) pendant un processus de traitement, le liant (9) étant réparti de manière hétérogène dans au moins une desdites une ou plusieurs épaisseurs de panneau (11, 12).

11. Élément de panneau traité (10) selon la revendication 10, dans lequel la concentration de liant (9) est supérieure dans une section (13) associée à la première face principale (2) de l'élément de panneau traité (10) et dans une section (13) associé à la seconde face principale (3) de l'élément de panneau traité (10), comparativement à la concentration de liant (9) dans une section centrale (14) de l'élément de panneau traité.

12. Élément de panneau traité (10) selon la revendication 10 ou 11, dans lequel la concentration de liant (9) est supérieure dans une section (13) associée à la première face principale (2) et dans une section (13) associée à une section d'interface (15) de l'élément de panneau traité (10), comparativement à la concentration de liant (9) dans une section (14) associée à une seconde face principale (3) de l'élément de panneau traité (10)

13. Élément de panneau traité (10) selon la revendication 10, dans lequel la concentration de liant (9) est supérieure dans une section (13) associée à la première face principale (2) d'une première épaisseur de panneau (11) et dans une section (13) associée à la seconde face principale (2') d'une seconde épaisseur de panneau (12), de même que dans une section (13) associée à une section d'interface (15) définissant les épaisseurs de panneau en butée mutuelle (11, 12), comparativement à une section intermédiaire (14) disposée entre la section (13) associée à la première ou seconde face principale (2, 2') et la section (13) associée à la section d'interface (15).

14. Élément de panneau traité (10) selon l'une quelconque des revendications 10 à 13, dans lequel l'élément de panneau traité (10) comporte une première section (13) comprenant du liant (9) et une seconde section (14) dépourvue de liant (9).

15. Élément de panneau traité (10) selon l'une quelconque des revendications 10 à 13, l'élément de panneau traité (10) comportant une première section (13) et une seconde section (14), la concentration de liant (9) dans la première section (13) étant supérieure à la concentration de liant dans la seconde section (14).

16. Élément de panneau (10) selon l'une quelconque des revendications 10 à 15, dans lequel le liant (9) est du phénol formaldéhyde.
